# EUROPÄISCHE PATENTANMELDUNG

(11) **EP 1 059 107 A1**
(43) Veröffentlichungstag der Anmeldung: **13.12.2000**
(21) Anmeldenummer: 99110897.8
(22) Anmeldetag: 08.06.1999
(51) Int. Cl.: B01D 45/08, B01D 50/00

(54) **Abscheideeinrichtung**

(71) Anmelder: Munters Euroform GmbH, 52072 Aachen (DE)
(72) Erfinder: Wurz, Prof. Dr. Dieter, 76530 Baden-Baden (DE); Hartig, Dipl.-Ing. Stefan, 77855 Achernsängen (DE)
(74) Vertreter: Patentanwälte Hauck, Graalfs, Wehnert, Döring, Siemons

(57) **Zusammenfassung**

Es wird eine Einrichtung zum Abscheiden von in einer Mehrphasenströmung mitgeführten Flüssigkeits- und/oder Feststoffteilchen beschrieben, die einen Abscheider, insbesondere Tropfenabscheider, aufweist. Dem Abscheider ist eine Agglomerationsvorrichtung vorgeschaltet, die mindestens zwei Reihen (1,2,3) von winklig, insbesondere senkrecht, zu ihren Längsachsen angeströmten Stäben (4) aufweist. Die Stäbe der einen Reihe sind gegenüber denen der benachbarten Reihe auf Lücke gestellt. Die Stäbe weisen eine größte Breite von 2-10mm auf, und die Agglomerationsvorrichtung ist mit einer Strömungsgeschwindigkeit von 2-15m/sec. angeströmt. Durch die Vorschaltung der Agglomerationsvorrichtung kann der nachfolgende Abscheider wesentlich einfacher ausgestaltet werden.

## Beschreibung

Die vorliegende Erfindung betrifft eine Einrichtung zum Abscheiden von in einer Mehrphasenströmung mitgeführten Flüssigkeits- und/oder Feststoffteilchen mit einem Abscheider.

Derartige Einrichtungen sind bekannt. Zum Abscheiden von Flüssigkeitströpfchen finden sogenannte Tropfenabscheider Verwendung, die es in einer Vielzahl von Bauarten gibt. Um einen besonders hohen Wirkungsgrad zu erreichen, können diese Tropfenabscheider relativ komplizierte Formen aufweisen. Dies ist insbesondere dann der Fall, wenn die kleinen Flüssigkeitströpfchen aus einer Mehrphasenströmung abgeschieden werden sollen. So sind beispielsweise sogenannte Lamellenabscheider bekannt, die extrem filigran ausgebildet sind und somit eine sehr aufwendige Herstellung erforderlich machen. Hinzu kommt, daß bei derartigen Tropfenabscheidern das Verkrustungsrisiko relativ hoch ist.

Der vorliegenden Erfindung liegt die Aufgabe zugrunde, eine Einrichtung der angegebenen Art zu schaffen, die bei einer besonders hohen Effizienz mit besonders geringem Energieaufwand eine besonders einfache Ausgestaltung des Abscheiders ermöglicht.

Diese Aufgabe wird erfindungsgemäß bei einer Einrichtung der angegebenen Art dadurch gelöst, daß dem Abscheider eine Agglomerationsvorrichtung vorgeschaltet ist, die mindestens zwei Reihen von winklig, insbesondere senkrecht, zu ihren Längsachsen angeströmten Stäben aufweisen, die eine größte Breite von 2-10 mm besitzen, wobei die Stäbe der einen Reihe gegenüber denen der benachbarten Reihe auf Lücke gestellt sind, und daß die Agglomerationsvorrichtung mit einer Strömungsgeschwindigkeit von 2-15 m/sec. angeströmt ist.

Die Erfindung beruht auf der Grundidee, durch die vorgesehene Agglomerationsvorrichtung, die in der Mehrphasenströmung enthaltenen Flüssigkeits- und/oder Feststoffteilchen zu vergrößern, so daß sich diese in einem nachfolgenden Abscheider auf vereinfachte Weise (und mit geringerem Energieaufwand) aus der Mehrphasenströmung abscheiden lassen. Der nachfolgende Abscheider kann daher relativ einfach ausgebildet sein. Der auf den ersten Blick erhöhte Mehraufwand durch Vorschaltung einer Agglomerationsvorrichtung wird durch die in bezug auf die Ausgestaltung des nachfolgenden Abscheiders erreichte Vereinfachung bei weitem kompensiert. Dadurch, daß der nachfolgende Abscheider nur noch von vergrößerten Flüssigkeits- und/oder Feststoffteilchen passiert wird, kann der Abscheider wesentlich gröber ausgebildet sein. Hinzu kommt, daß hierdurch die Verkrustungsanfälligkeit reduziert wird.

Die erfindungsgemäß vorgesehene Agglomerationsvorrichtung bewirkt, daß feine Tropfen und/oder Partikel der Mehrphasenströmung an die starren Strukturen der Agglomerationsvorrichtung angelagert oder im Fluge aneinander gelagert werden. Wesentlich ist, daß die Agglomerationsvorrichtung dabei nicht als Abscheider wirkt. Mit anderen Worten, die kleinen Tröpfchen oder Partikel, die primär an den Elementen der Agglomerationsvorrichtung abgeschieden werden, werden gleich anschließend wieder in Gestalt größerer Tropfen oder Partikel von der Gasströmung mitgerissen, so daß sie nachfolgend beispielsweise in einem herkömmlichen Lammellentropfenabscheider abgeschieden werden können.

Damit eine reine Agglomerationsfunktion gewährleistet ist, wird die Agglomerationsvorrichtung mit einer Strömungsgeschwindigkeit von 2-15 m/sec. angeströmt. Bei der Agglomerationsvorrichtung kann somit mit einer relativ hohen Strömungsgeschwindigkeit gearbeitet werden, weil letztendlich keine direkte Abscheidung, sondern nur eine Tropfenvergrößerung bzw. Partikelvergrößerung erreicht werden soll, die eine effiziente Abscheidung vorbereiten soll. Demgegenüber dürfen normale Tropfenabscheider nur bis zu einer geringeren Maximalgeschwindigkeit betrieben werden, bei deren Überschreitung es zum Tropfenmitriß käme, was unerwünscht ist.

Ein weiteres wichtiges Merkmal der Erfindung besteht darin, daß die winklig, insbesondere senkrecht, zu ihren Längsachsen angeströmten Stäbe eine größte Breite von 2-10 mm besitzen. Es hat sich gezeigt, daß in diesem Bereich die gewünschte Agglomerationswirkung am besten ist. Bei kleineren Stabbreiten als 2 mm steigt das Verkrustungsrisiko stark an. Größere Stabbreiten als 10 mm führen zu einer Wirkung der Agglomerationsvorrichtung als Tropfenabscheider, die unerwünscht ist und ausschließlich vom nachfolgenden Abscheider bzw. Tropfenabscheider übernommen werden soll.

Vorrichtungen zum Agglomerieren von Flüssigkeits- und/oder Feststoffteilchen sind an sich bekannt. Eine solche Vorrichtung ist beispielsweise in der DE 35 35 901 C2 beschrieben. Diese Vorrichtung enthält im wesentlichen parallele Abscheideplatten nach Art von Tropfenabscheidern mit mindestens einer Umlenkung der Mehrphasenströmung. Die Herstellung von derartigen Agglomerationsvorrichtungen ist jedoch relativ aufwendig.

Eine Agglomerationsvorrichtung, die mindestens zwei Reihen von winklig, insbesondere senkrecht, zu ihren Längsachsen angeströmten Stäben aufweist, wobei die Stäbe der einen Reihe gegenüber denen der benachbarten Reihe auf Lücke gestellt sind, ist aus der DE 195 03 842 A1 bekannt. In dieser Veröffentlichung sind jedoch keine Angaben über die größte Breite der Stäbe der Agglomerationsvorrichtung enthalten. Ferner sind keine Angaben darüber enthalten, mit welcher Strömungsgeschwindigkeit die Agglomerationsvorrichtung anzuströmen ist. Schließlich geht aus dieser Veröffentlichung nicht die Kombination einer derartigen Agglomerationsvorrichtung mit einem Abscheider, insbesondere Tropfenabscheider, hervor.

Die DE 85 36 592 U1 beschreibt einen Luftwäscher, bei dem als Tropfenabscheider Profile und Profile oder Rohre vorgesehen sind, wobei die in Strömungsrichtung nachgeschalteten Rohre vor den Durchströmspalten der vorderen Rohrreihe angeordnet sind. Als Durchmesser für die Rohre werden Werte von 110 mm und 125 mm angegeben. Damit übernehmen diese Rohre aber ausschließlich die Funktion eines Tropfenabscheiders, wie dies in den entsprechenden Veröffentlichungen auch herausgestellt ist.

Mit der erfindungsgemäßen Lösung läßt sich ein Agglomerator-Konzept verwirklichen, bei dem die agglomerativ wirkenden Elemente aus einfachen Teilen, beispielsweise gängigem Halbzeug, bestehen, was fertigungstechnich besonders vorteilhaft ist. Überraschenderweise hat sich gezeigt, daß sich bei einem derartigen Agglomeratorkonzept die Tropfen oder Partikel nicht gradlinig (d.h. schräg) durch den Agglomerator bewegen. Vielmehr richtet sich die Gasströmung selbst bei Schräganströmung senkrecht zur Eintrittsebene aus und verfolgt einen besonders engkurvigen Weg durch den Agglomerator, wodurch eine optimale Agglomerationswirkung für Partikel und/oder Tropfen erzielt wird. Dies gilt sowohl für die Agglomeration an den Stäben als auch für die Agglomeration im freien Fluge.

Vorzugsweise sind die Stäbe der Agglomerationsvorrichtungen als Rundstäbe ausgebildet. Bei solchen Rundstäben handelt es sich um besonders einfache Bauteile, d.h. im wesentlichen einfachstes Halbzeug, so daß hiermit besonders wirtschaftlich gearbeitet werden kann. Der Außendurchmesser der Rundstäbe beträgt hierbei 2-10 mm.

Für die Effizienz des Systems ist es von entscheidender Bedeutung, die Verhältnisse der charakteristischen Abmessungen derart aufeinander abzustimmen, daß die Strömung tatsächlich einem möglichst kurvenreichen Weg durch die Stäbe folgt.Eine besonders bevorzugte Ausführungsform der Erfindung, in der dieses Merkmal optimiert ist, zeichnet sich dadurch aus, daß die Durchmesser aller Stäbe der Reihen 1 bis n sowie die Abstände s₁ bis sₙ und e₁ bis eₙ - 1 jeweils gleich groß sind, wobei folgende Beziehungen gelten:
e/s = 0,3 - 0,7
D/S = 2 - 10.
Hierin bedeuten:
s = Abstand der Stäbe einer Reihe
e = Abstand der Stäbe benachbarter Reihen.

Besonders gute Ergebnisse werden erzielt, wenn e/s = 0,5 ist.

Bei einer weiteren Ausführungsform der Erfindung sind die Durchmesser D₁ bis Dₙ der Stabreihen 1 bis n unterschiedlich groß. Hierbei wurden besonders gute Ergebnisse mit einer Ausführungsform erzielt, bei der der Durchmesser Dₙ der letzten Stabreihe 0,7 bis 0,95 Mal so groß ist wie der Durchmesser der vorhergehenden Stabreihe Dₙ₋₁. Besonders bevorzugt wird hierbei eine Ausführungsform, die drei Stabreihen aufweist, wobei die ersten beiden Stabreihen Stäbe mit gleichem Durchmesser besitzen, während die dritte Reihe Stäbe aufweist, deren Durchmesser die vorstehend angegebene Bedingung erfüllt.

Auch bei den Ausführungsformen mit unterschiedlichem Stabdurchmesser wurden die Abstände der Verbindungslinien der Mittelpunkte der Stabreihen 1 bis n hier konstant gehalten. Dies ist jedoch nicht zwingend.

Bei einer anderen Ausführungsform der Erfindung beseht die letzte Stabreihe aus länglichen tropfenförmigen Profilen, die Kanäle einschließen, welche eine strömungsgünstige Diffusorkonfiguration darstellen.

Die Erfindung wird nachfolgend anhand eines Ausführungsbeispiels in Verbindung mit der Zeichnung im einzelnen erläutert. Es zeigen:
- Figur 1: eine schematische Seitenansicht einer Einrichtung zum Abscheiden von in einer Mehrphasenströmung mitgeführten Flüssigkeits- und/oder Feststoffteilchen mit einer Agglomerationsvorrichtung und einem nachgeschalteten Tropfenabscheider; und
- Figur 2: eine vergrößerte schematische Seitenansicht der Agglomerationsvorrichtung der Figur 1.

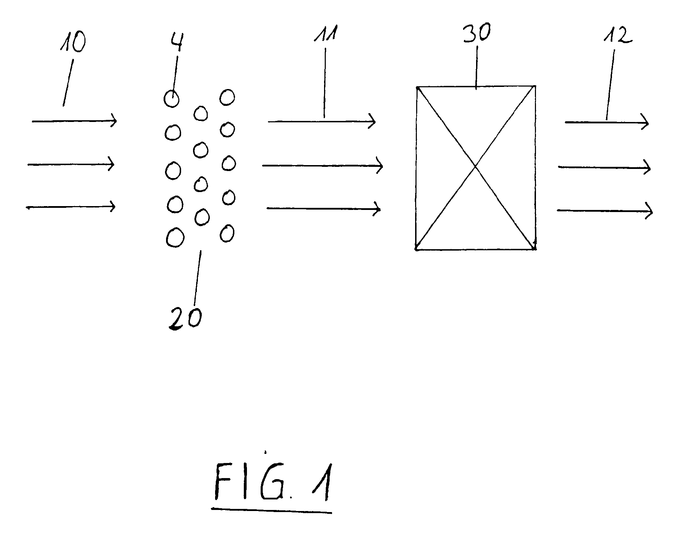

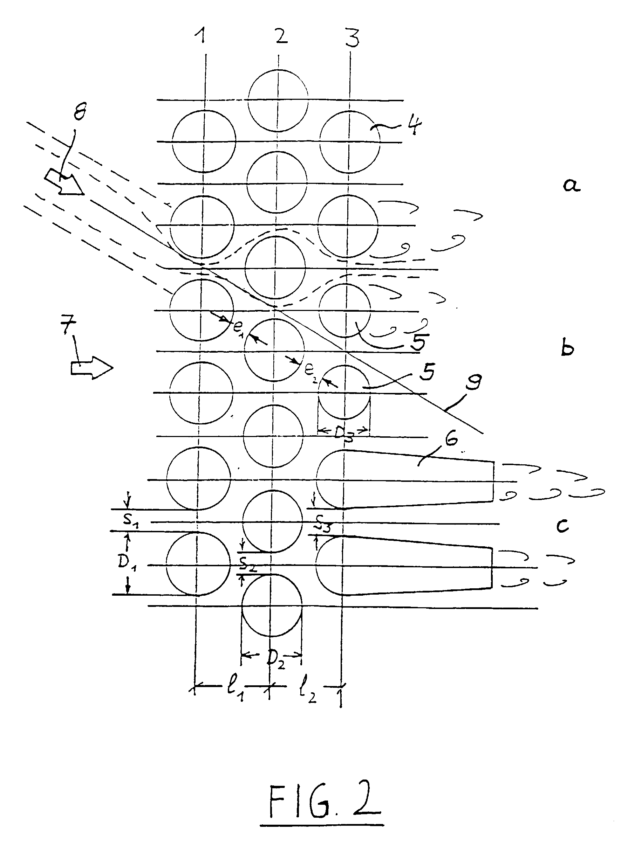

Die in Figur 1 gezeigte Einrichtung zum Abscheiden von in einer Mehrphasenströmung mitgeführten Teilchen ist eine Einrichtung zum Abscheiden von Flüssigkeitströpfchen. Die Vorrichtung wird in der Figur von links angeströmt, wie bei 10 gezeigt. Die Mehrphasenströmung 10 erreicht zuerst die Agglomerationsvorrichtung 20, die aus drei Reihen von Rundstäben 4 besteht. Während die Stäbe der ersten und dritten Reihe die gleiche Höhenlage einnehmen, sind die Stäbe der zweiten Reihe in bezug auf die Stäbe der ersten und dritten Reihe auf Lücke gestellt. Der genaue Aufbau der Agglomerationsvorrichtung wird in Verbindung mit Figur 2 erläutert.

Die Mehrphasenströmung verläßt die Agglomerationsvorrichtung 20 mit agglomerierten Flüssigkeitsteilchen. Mit anderen Worten, die in Figur 1 bei 11 gezeigte Mehrphasenströmung enthält größere Flüssigkeitsteilchen als die bei 10 gezeigte Strömung. Die Mehrphasenströmung 11 dringt dann in einen bei 30 schematisch gezeigten Tropfenabscheider, beispielsweise Lamellentropfenabscheider, ein. In diesem Abscheider werden die Tropfen aus der Strömung abgeschieden, so daß die bei 12 gezeigte, den Tropfenabscheider 30 verlassende Strömung im wesentlichen keine Flüssigkeitspartikel mehr enthält. Die im Tropfenabscheider 30 abgeschiedenen Flüssigkeitstropfen laufen durch Schwerkraftwirkung im Abscheider nach unten und werden über geeignete Einrichtungen (nicht gezeigt) geführt.

Figur 2 zeigt den Aufbau der Agglomerationsvorrichtung 20 im einzelnen. Man erkennt die drei Reihen 1, 2, 3 der Rundstäbe 4. Die Mittelpunkte der Stäbe der zweiten Reihe befinden sich genau in der Mitte zwischen den Mittelpunkten von je zwei Stäben der ersten und dritten Reihe.

Die Rundstäbe 4 der Vorrichtung besitzen den gleichen Durchmesser, der bei diesem Ausführungsbeipiel 10 mm beträgt. Die Geschwindigkeit der Mehrphasenströmung, mit der die Agglomerationsvorrichtung angeströmt wird, beträgt 10 m/sec.

Die Vorrichtung wird in der Figur von links angeströmt, d.h. rechwinklig zur Achse der Rundstäbe 4, wie bei 7 gezeigt, oder schiefwinklig dazu, wie bei 8 gezeigt.

Bei der bei 8 gezeigten schrägen Strömung ist theoretisch eine geradlinige Partikelflugbahn durch die Vorrichtung hindurch möglich, wie bei 9 gezeigt. Dies ist jedoch bei der erfindungsgemäßen Ausführung nicht der Fall. Vielmehr richtet sich hierbei die Gasströmung senkrecht zur Eintrittsebene aus und verfolgt den dargestellten engkurvigen Weg durch den Agglomerator.

Bei der im Bereich a dargestellten ersten Ausführungsform der Vorrichtung besitzen die Rundstäbe 4 der ersten, zweiten und dritten Reihe den gleichen Durchmesser. Bei der im Bereich b dargestellten zweiten Ausführungsform weisen die Rundstäbe der ersten und zweiten Reihe den gleichen Durchmesser auf, während die Rundstäbe 5 der dritten Reihe einen kleineren Durchmesser besitzen. Bei der im Bereich c dargestellten dritten Ausführungsform weisen die Rundstäbe der ersten und zweiten Reihe ebenfalls den gleichen Durchmesser auf. Anstatt der Rundstäbe der dritten Reihe sind hierbei aerodynamisch vorteilhafte schlanke Profile 6 vorgesehen.

Die in der Figur verwendeten Bezeichnungen haben folgende Bedeutung:
- D₁ =: Durchmesser der Rundstäbe der ersten Reihe.
- D₂ =: Durchmesser der Rundstäbe der zweiten Reihe.
- D₃ =: Durchmesser der Rundstäbe der dritten Reihe.
- S₁ =: Abstand der Rundstäbe der ersten Reihe.
- S₂ =: Abstand der Rundstäbe der zweiten Reihe.
- S₃ =: Abstand der Rundstäbe bzw. Profile der dritten Reihe
- e₁ =: Abstand der Rundstäbe der ersten und zweiten Reihe.
- e₂ =: Abstand der Rundstäbe der zweiten und dritten Reihe.
- l₁ =: Mittenabstand der Rundstäbe der ersten und zweiten Reihe.
- l₂ =: Mittenabstand der Rundstäbe der zweiten und dritten Reihe.

Wie erwähnt, weisen bei der im Bereich a dargestellten Ausführungsform sämtliche Stäbe der hintereinander liegenden, auf Lücke gestellten Reihen denselben Durchmesser auf. Um zu erreichen, daß die Strömung einem möglichst kurvenreichen Weg durch die Vorrichtung folgt, gelten für diese Ausführungsform folgende Bemessungsgrundregeln:
D₁ = D₂ = D₃ = D
s₁ = s₂ = s₃ = s
e₁ = e₂ = e
e/s = 0,3 - 0,7, bevorzugt 0,5
D/s = 2-10

Bei der im Bereich b der Figur dargestellten Ausführungsform ist unter Beibehaltung des einfachen Grundelementes Rundstab hier eine Abstufung der Stabdurchmesser vorgenommen. Nur die Reihen 1 und 2 sind mit gleichem Stabdurchmesser (D₁ = D₂), die Reihe 3 jedoch mit geringerem Durchmesser D₃ ausgeführt. Dies ist aus folgenden Gründen vorteilhaft: Die erste und zweite Stabreihe lösen bei erfindungsgemäßer Dimensionierung bereits die Aufgabe, das Strömungsfeld der Gasphase orthogonal auszurichten bzw. zu stabilisieren. Durch geeignete Dimensionierung der dritten Stabreihe kann der Druckverlust des Agglomerators deutlich verringert werden. Die hohe Geschwindigkeit an der Engstelle zwischen benachbarten Stäben der zweiten Reihe würde bei freier Ablassung einen erheblichen Strömungsaustrittsverlust bewirken, da der stark divergente Querschnittsverlauf zwangsläufig zur Strömungsablösung führt. Durch geeignete Positionierung einer Reihe 3 mit etwas geringerem Stabdurchmesser wird bewirkt, daß die Strömung mit geringem Druckverlust auf eine kleinere Geschwindigkeit, entsprechend dem größeren Abstand s₃ > s₂ = s₁ verzögert wird. Vorteilhaft ist z.B. die Einhaltung folgender Bemessungsregeln:
D₁ = D₂
D₃ = (0,7 - 0,95) D₁.

Dadurch ergibt sich für l₁ = l₂ auch eine definierte Variation der Länge e (e₂ > e₁).

Bei der im Bereich c dargestellten dritten Ausführungsform sind die Rundstäbe der letzten Stabreihe durch aerodynamisch vorteilhafte schlanke Profile 6 ersetzt, wobei jedoch die kreisrunden Stäbe der Reihen 1 und 2 beibehalten sind.

## Patentansprüche

1. Einrichtung zum Abscheiden von in einer Mehrphasenströmung mitgeführten Flüssigkeits- und/oder Feststoffteilchen mit einem Abscheider, dadurch gekennzeichnet, dadurch daß dem Abscheider (39) eine Agglomerationsvorrichtung (20) vorgeschaltet ist, die mindestens 2 Reihen (1, 2, 3) von winklig, insbesondere senkrecht, zu ihren Längsachsen angeströmten Stäben (4, 5) aufweist, die eine größte Breite von 2-10 mm besitzen, wobei die Stäbe (4) der einen Reihe (2) gegenüber denen der benachbarten Reihe (1, 3) auf Lücke gestellt sind, und daß die Agglomerationsvorrichtung (20) mit einer Strömungsgeschwindigkeit von 2-15 m/sec. angeströmt ist.

2. Vorrichtung nach Anspruch 1, dadurch gekennzeichnet, daß die Stäbe (4,5) als Rundstäbe ausgebildet sind.

3. Vorrichtung nach Anspruch 2, dadurch gekennzeichnet, daß der Außendurchmesser der Rundstäbe 2-10 mm beträgt.

4. Vorrichtung nach Ansprcuh 2 oder 3, dadurch gekennzeichnet, daß die Durchmesser aller Stäbe (4) der Reihen 1 bis n sowie die Abstände s₁ bis sₙ und e₁ bis eₙ₋₁ jeweils gleich groß sind, wobei folgende Beziehungen gelten:
e/s = 0,3 - 0,7
D/s = 2 - 10
worin bedeuten:
D: Durchmesser der Rundstäbe
s: Abstand der Rundstäbe einer Reihe
e: Abstand der Rundstäbe benachbarter Reihen.

5. Vorrichtung nach Anspruch 4, dadurch gekennzeichnet, daß e/s = 0,5 ist.

6. Vorrichtung nach Anspruch 2, dadurch gekennzeichnet, daß die Durchmesser D₁ bis Dₙ der Stabreihen 1 bis n unterschiedlich groß sind.

7. Vorrichtung nach Anspruch 6, dadurch gekennzeichnet, daß die Durchmesser Dₙ der letzten Stabreihe 0,7 bis 0,95 mal so groß sind wie der Durchmesser der vorhergehenden Stabreihe Dₙ₋₁.

8. Vorrichtung nach Anspruch 7, dadurch gekennzeichnet, daß die Abstände der Verbindungslinien der Mittelpunkte der Stabreihen l₁ bis lₙ₋₁ konstant sind.

9. Vorrichtung nach einem der vorangehenden Ansprüche, dadurch gekennzeichnet, daß die letzte Stabreihe aus länglichen tropfenförmigen Profilen (6) besteht, die Kanäle einschließen, welche eine strömungsgünstige Diffusionskonfiguration darstellen.
